# EUROPÄISCHE PATENTSCHRIFT

(11) **EP 0 859 927 B1**
(45) Veröffentlichungstag und Bekanntmachung des Hinweises auf die Patenterteilung: **04.10.2001**
(21) Anmeldenummer: 96939849.4
(22) Anmeldetag: 19.11.1996
(51) Int. Cl.: F16L 37/12

(54) **SPANNZANGENVORRICHTUNG**
COLLET DEVICE
DISPOSITIF A PINCES DE SERRAGE

(30) Priorität: 20.11.1995 DE 19543178
(43) Veröffentlichungstag der Anmeldung: 26.08.1998
(73) Patentinhaber: Weh GmbH, Verbindungstechnik, D-89257 Illertissen (DE)
(72) Erfinder: WEH, Wolfgang, D-89257 Illertissen (DE); WEH, Erwin, D-89257 Illertissen (DE)
(74) Vertreter: Fiener, Josef
(86) Internationale Anmeldenummer: EP9605098
(87) Internationale Veröffentlichungsnummer: WO9719288

(56) Entgegenhaltungen:
- EP-A- 0 202 592
- DE-A- 2 428 646
- DE-A- 3 639 528
- DE-U- 8 631 004
- DE-U- 8 910 276

## Beschreibung

Die Erfindung betrifft eine Spannzangenvorrichtung, insbesondere bei Schnellanschlußkupplungen für gasförmige und/oder flüssige Medien, gemäß den oberbegrifflichen Merkmalen des Anspruches 1.

Derartige Spannzangenvorrichtungen stellen durch ihre einfache Handhabung einen schnellen und sicheren Anschluß an z.B. Gasflaschen dar, wodurch ein zeitaufwendiges An- und Abschrauben am Anschlußgegenstück entfällt. Die Spannzangen greifen dabei formschlüssig an Innen- und Außengewinden, Bund-, Stutzen-, Flanschanschlüssen usw. an.

Die EP 0 202 592 beschreibt eine Steckkupplung zum druckdichten Anschluß an eine einen komplementären Anschluß aufweisende Einrichtung. Diese Steckkupplung umfaßt ein zylinderisches Gehäuse mit einem darin in Axialrichtung verschiebbaren Kolben, der an seinem einen Ende aus dem Gehäuse herausragende Spannzangen aufweist. Bei einer Axialverschiebung des Kolbens relativ zu dem Gehäuse werden die Spannzangen über eine Rampen-bzw. Schrägflächenanordnung zwischen Gehäuse und Kolben je nach Bewegungsrichtung radial auseinandergespreizt oder zusammengedrückt. In einer ersten Ausführungsform sind der Kolben und die Spannzangen einstückig ausgebildet. Dies erfordert einen dünnen Übergangsbereich zwischen dem Kolben und den Spannzangen, um die Spannzangen federnd über die Rampenanordnung nach innen oder außen gleiten lassen zu können. Gerade bei größeren Vorrichtungsabmessungen muß dieser Übergang verhältnismäßig dünn sein, damit die zum Verschieben aufzuwendende Kraft nicht zu groß wird. Bei häufigen Lastwechseln ist aber dieser dünne Übergang besonders anfällig für Ermüdungsbruch. Zudem muß zum Auswechseln der Spannzangen der gesamte Steckkupplungsaufbau zerlegt werden.

Die Nachteile der einstückigen Ausführungsform gleicht eine weitere Ausführungsform der EP 0 202 592 aus, bei der die Spannzangen und der Kolben separate Bauteile darstellen und die Spannzangen an dem Kolben eingehakt sind. Die Spannzangen und Spannkolben können zur zusätzlichen Sicherung auch miteinander verstiftet werden. Dadurch können die Spannzangen ohne Wechsel des Spannkolbens ausgetauscht und individuell an den jeweiligen Gegenanschluß angepaßt werden. Jedoch muß auch bei dieser Ausführungsform zumindest noch der vordere Teil des Gehäuses zerlegt, z. B. abgeschraubt werden, um die Spannzangen auswechseln zu können.

Aus der DE-A-24 28 646 ist weiterhin eine Schnellverbindung für Leitungen mit Druckbehältern bekannt, bei der eine Hülse auf einem Außenmantel eines Leitungsendes geführt ist. Im Inneren der axial verschiebbaren Hülse sind zweiarmige Kipphebel zum formschlüssigen Eingriff mit einem Anschlußgegenstück angeordnet. Die Kipphebel weisen an ihrer Innenseite eine Nut auf, in der eine als Widerlager für eine Feder dienende Scheibe gelagert ist, die über die Feder mit einer Bundscheibe und dadurch mit der Hülse gekoppelt ist. Um die Kipphebel austauschen zu können, müßte hierbei die Schiebehülse ebenfalls demontiert werden.

Demzufolge liegt der Erfindung die Aufgabe zugrunde, eine Spannzangenvorrichtung der eingangs beschriebenen Art zu schaffen, die eine einfachere und schnellere Auswechslung und Montage der Spannzangen ermöglicht.

Diese Aufgabe wird gelöst durch die Merkmale des Patentanspruches 1.

Demgemäß ist ein bewegliches Fixierelement an einer Spannzangenanordnung vorgesehen, so daß es in seiner Arretierstellung die Lagerenden der Spannzangen bezüglich dem Spannkolben formschlüssig abstützt oder umgreift. Dabei kann das Fixierelement aus dem Eingriff mit den Spannzangenenden bewegt werden, wodurch die Spannzangen mühelos aus der Einhakverbindung ausgehakt und stirnseitig entnommen werden können, ohne dabei das Gehäuse der Spannvorrichtung demontieren zu müssen.

Vorteilhafte Ausgestaltungen sind Gegenstand der Unteransprüche, wobei das Fixierelement vorzugsweise in Axialrichtung relativ zur Spannzangenanordnung verschiebbar ist, so daß es z. B. mittels eines stirnseitig eingeführten Dornes aus seiner Arretierstellung verschoben werden kann. Dabei es aber auch möglich, daß das Fixierelement in Radialrichtung relativ zu den Spannzangenenden beweglich sein kann, so z. B. mittels eines klappenförmigen Fixierelementes. Das Fixierelement ist insbesondere hutförmig im Innenraum der Spannzangenanordnung oder hülsenförmig um die Spannzangenanordnung herum angeordnet. Die Arretierungsfläche des Fixierelementes, die ein Lagerende der Spannzangen formschlüssig aufnimmt, weist eine rechtwinklig abgestufte oder bevorzugt eine angeschrägte Form auf, wodurch das Einrasten von ausgetauschten Spannzangen beim Wechselvorgang erleichtert wird. Ferner wird das Fixierelement mittels eines federelastischen Elementes insbesondere einer Druck-Schraubenfeder in seiner Arretierstellung gehalten.

Bei der erfindungsgemäßen Spannzangenvorrichtung läßt sich durch das Zurückschieben des Fixierelementes relativ zu der Spannzangenanordnung, ein schnelles Austauschen der Spannzangen und somit auch eine schnellere Anpassung an verschiedenste Anschlußformen erzielen. Ebenso ist eine Anwendung dieser kompakten und einfach zu handhabenden Spannzangenvorrichtung bei Werkzeugmaschinen möglich, und zwar als Werkzeugspannvorrichtung im Innern einer Bearbeitungsspindel bzw. als Werkzeughalter in einem Werkzeugwechsler oder Werkzeugmagazin.

Nachfolgend wird die Erfindung unter Bezugnahme auf die beigefügten Zeichnungen näher erläutert und beschrieben. Es zeigen:
- Fig. 1: eine Spannzangenvorrichtung in Eingriffsstellung der Spannzangen mit einem hutförmigen, zentral innenliegenden Fixierelement;
- Fig. 2: eine Spannzangenvorrichtung nach Fig. 1 in Lösestellung der Spannzangen;
- Fig. 3: eine erste Ausführungsform eines hutförmigen Fixierelementes in auseinandergezogener Darstellung;
- Fig. 4: eine zweite Ausführungsform eines hutförmigen Fixierelementes in auseinandergezogener Darstellung;
- Fig. 5: eine dritte Ausführungsform eines hutförmigen Fixierelementes in auseinandergezogener Darstellung;
- Fig. 6: eine Spannzangenvorrichtung mit einer vierten Ausführungsform eines hutförmigen Fixierelementes in Arretierstellung;
- Fig. 7: eine Spannzangenvorrichtung mit einer fünften Ausführungsform eines hutförmigen Fixierelementes im Halbschnitt in Arretierstellung (obere Hälfte) und in Lösestellung (untere Hälfte);
- Fig. 8: eine Vorderansicht der Spannzangen der Spannzangenvorrichtung;
- Fig. 9a,b: eine Spannzangenvorrichtung mit einer ersten Ausführungsform eines hülsenförmigen, außenliegenden Fixierelementes;
- Fig. 10: eine zweite Ausführungsform eines hülsenförmigen, außenliegenden Fixierelementes;
- Fig. 11: eine dritte Ausführungsform eines hülsenförmigen, außenliegenden Fixierelementes; und
- Fig. 12: eine Spannzangenvorrichtung mit einer kugelgelenkförmigen Lagerung einer Spannzange in einem Spannkolben.

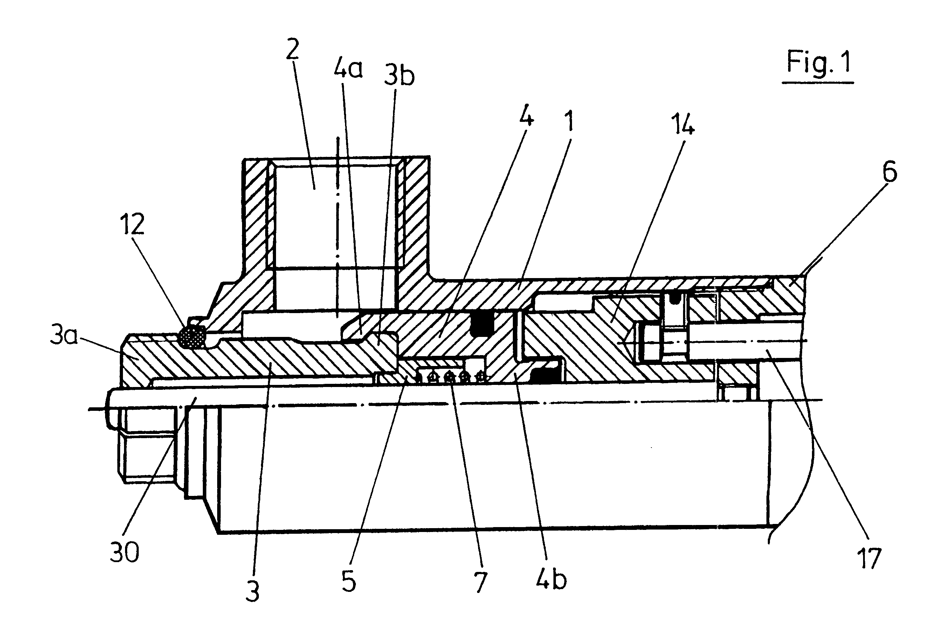

Die Erfindung wird nachfolgend am Beispiel eines Schnellanschlusses für gasförmige und/oder flüssige Medien beschrieben, kann aber ebenso in Werkzeugmaschinen Einsatz finden. Fig. 1 zeigt eine Spannzangenvorrichtung in einer Schnellanschlußkupplung, die ein vorderes Gehäuseteil 1 und ein hinteres Gehäuseteil 6 aufweist, jedoch auch aus einer einstückigen Gehäusehülse bestehen kann. Der vordere Gehäuseteil 1 umfaßt eine Spannzangenanordnung 3, 4, die aus mehreren Spannzangen 3 und einem Spannkolben 4 besteht. Die Spannzangen 3 sind über den Spannkolben 4 mit einem vorderen Teil 14 einer Betätigungseinrichtung gekoppelt, die im wesentlichen vom hinteren Gehäuseteil 6 aufgenommen wird. Das vordere Gehäuseteil 1 ist bei der hier dargestellten Schnellverschlußkupplung mit einer Eintritts- bzw. Austrittsöffnung 2 für flüssige oder gasförmige Medien versehen. An seinem den Spannzangen 3 zugekehrten, vorderen Ende 4a weist der Spannkolben 4 eine Ausnehmung auf, in die ein komplementäres, dem Spannkolben 4 zugekehrtes, hinteres Lager-Ende 3b der Spannzangen 3 formschlüssig eingreift. Das vordere Anschluß-Ende 3a der Spannzangen 3 ist in diesem Ausführungsbeispiel mit einem Außengewinde versehen, kann aber auch aus einem Innengewinde, einer Wulst, Nut und anderen Profilformen bestehen, die einen formschlüssigen Profileingriff mit einem Anschlußgegenstück z. B. einem Nippel ermöglichen.

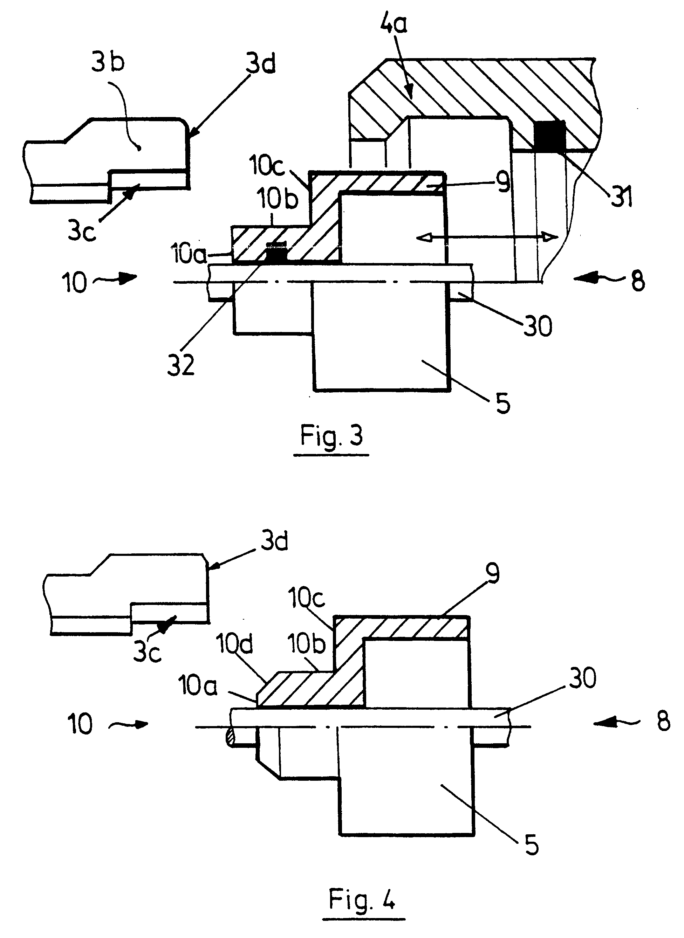

Im Innenraum der Spannzangenanordnung 3, 4 ist ein hutförmiges Fixierelement 5 angeordnet, das das hintere Lager-Ende 3b der Spannzangen 3 im vorderen Ende 4a des Spannkolbens 4 hält. Das Fixierelement 5 gewährleistet dabei eine formschlüssige Lagerung der Spannzangen 3 in dem Spannkolben 4 und weist auf seiner Rückseite 8 einen Bund 9 auf, der in seinem Inneren ein federelastisches Element 7 aufnimmt, wie dies in Fig. 3 dargestellt ist. Mit Rückseite bzw. hinterer Seite ist nachfolgend immer die auf der rechten Seite der Zeichenebene liegende Seite und mit Stirn- oder Vorderseite entsprechend die auf der linken Seite der Zeichenebene liegende Seite gemeint.

Das federelastische Element 7 ist vorzugsweise eine Druckfeder, die das Fixierelement 5 in die in Fig. 1 dargestellte Arretierstellung zu den Spannzangen 3 hin beaufschlagt und vorgespannt, sowie das Fixierelement 5 relativ zu der Spannzangenanordnung 3, 4 verschiebbar anordnet. Anstelle einer Druckfeder kann auch ein Tellerfedernpaket, eine Gummifeder oder eine Gasfeder usw. eingesetzt werden. Das federelastische Element 7 stützt sich dabei am abgestuften, hinteren Teil 4b des Spannkolbens 4 ab.

Das Fixierelement 5, der hintere Teil 4b des Spannkolbens 4 und der vordere Teil 3a der Spannzangen 3 sind in diesem Ausführungsbeispiel um einen mittig in das vordere Gehäuseteil 1 ragenden, ortsfesten Führungszapfen 30 herum angeordnet und stützen sich auf diesem bei ihrer Axialbewegung ab. Der Führungszapfen 30 ist in dem zweiten Gehäuseteil 6 befestigt. Eine Spannzangenvorrichtung gemäß dieser Erfindung kann aber ebenso ohne Führungszapfen 30 ausgebildet sein. Ferner ist zwischen dem Spannkolben 4 und dem vorderen Gehäuseteil 1 sowie zwischen dem Führungszapfen 30 und dem Spannkolben 4 je ein geschwärzt eingezeichnetes Dichtelement vorgesehen, um bei der Fluidleitung zwischen Öffnung 2 und Anschlußende 3a bzw. Anschlußgegenstück eine entsprechende Abdichtung sicherzustellen.

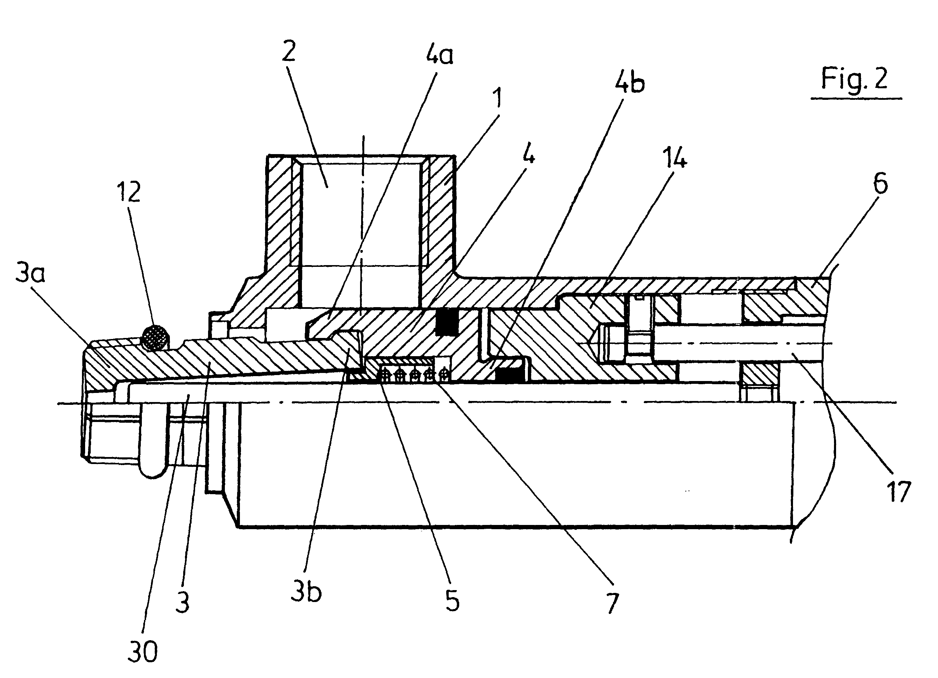

Fig. 1 zeigt die Spannzangen 3 in ihrer radial aufgespreizten Eingriffsstellung mit einem nicht näher dargestellten Anschlußgegenstück. Wird eine hier nicht näher dargestellte Betätigungseinrichtung betätigt, z. B. über einen Hebel oder Bügel, so wird relativ zum hinteren Gehäuseteil 6 in Axialrichtung nach links, d. h. in Richtung des linken Bildrandes, ein Betätigungsstift 17 verschoben, der durch einen Durchbruch des hinteren Gehäuseteils 6 hindurch geführt wird und mit dem vorderen Teil 14 der Betätigungseinrichtung verbunden ist, welches wiederum mit dem hinteren Teil 4b des Spannkolbens 4 gekoppelt ist. Somit wird die Spannzangenanordnung 3, 4 zusammen mit dem Fixierelement 5 relativ zu dem vorderen Gehäuseteil 1 und dem Führungszapfen 30 ebenfalls in Axialrichtung nach links verschoben, wie dies in Fig. 2 dargestellt ist. Die Spannzangen 3 ragen dann mit ihren vorderen Anschluß-Enden 3a über die Vorderkante des Führungszapfens 30 hinaus und werden mittels eines um sie herum angeordneten, elastischen O-Ringes 12 zusammengedrückt. Damit die Spannzangen 3 diese radiale Verschwenkung durchführen können, muß das Fixierelement 5 gleichzeitig geringfügig zum rechten Bildrand hin, in axiale Richtung ausweichen, d. h. relativ zur Spannzangenanordnung 3, 4 beweglich sein, ohne dabei aber die Arretierung der Spannzangen 3 zu lösen. Diese minimale axiale Beweglichkeit des Fixierelementes 5 wird durch das federelastische Element 7 sichergestellt. In der radial zusammengedrückten Position kann das vordere Anschluß-Ende 3a der Spannzangen 3 in ein Anschlußgegenstück mit Innengewinde eingeführt werden und dann bei erneuter Betätigung der Betätigungseinrichtung in entgegengesetzter Richtung wieder in die in der Fig. 1 dargestellte, aufgespreizte Eingriffsstellung zurückgebracht werden. In dieser Eingriffsstellung nimmt der Dichtring 12 zudem die in Fig. 1 dargestellte Abdichtung gegen das Entweichen der Medien in die Umgebung vor.

Fig. 3 zeigt das auch in Fig. 1 und 2 verwendete erste Ausführungsbeispiel des hutförmigen Fixierelementes 5 in vergrößerter, auseinandergezogener Darstellung, das einen in Axialrichtung verlaufenden Durchbruch zur Aufnahme des Führungszapfens 30 aufweist. Das Fixierelement 5 weist an seiner Stirnseite 10 eine rechtwinklig abgestufte Form 10a, 10b und eine rechtwinklige Anschlag- und Aufnahmefläche 10b, 10c für Lagerungsenden bildende Innenkanten 3c, 3d der Spannzangen 3 auf. Wie bereits oben erwähnt, weist das Fixierelement 5 auf seiner Rückseite 8 einen Bund 9 auf, der in seinem Inneren ein federelastisches Element 7 aufnimmt. Des weiteren können, wie in Fig. 3 dargestellt, auch Dichtelemente 31, 32 zwischen Spannkolben 4 und Fixierelement 5 oder zwischen Fixierelement 5 und Führungszapfen 30 vorgesehen sein. Diese Dichtelemente 31, 32 verhindern, daß das Medium in einen Raum eindringt (siehe Fig. 1), der vom Fixierelement 5, dem Spannkolben 4 und dem Führungszapfen 30 umgeben ist, und somit die axiale Verschiebbarkeit des Fixierelementes 5 gehemmt bzw. blockiert wird. Die Dichtelemente 31, 32 können dabei wahlweise in den Spannkolben 4, das Fixierelement 5 oder den Führungszapfen 30 eingesetzt werden.

Fig. 4 zeigt eine modifizierte Ausführungsform des in Fig. 3 dargestellten Fixierelementes 5, das ebenfalls einen in Axialrichtung verlaufenden Durchbruch für den Führungszapfen 30 aufweist. Dieses Fixierelement 5 weist an seiner Stirnseite 10 eine angeschrägte Form 10d auf, die das Einfügen der Spannzangen 3 in den Spannkolben 4 über diese angeschrägte Führungsfläche gleitend erleichtert. Die weiteren Merkmale dieses Ausführungsbeispiels sind identisch mit denen der Fig. 3, weshalb auf sie nicht mehr näher eingegangen wird.

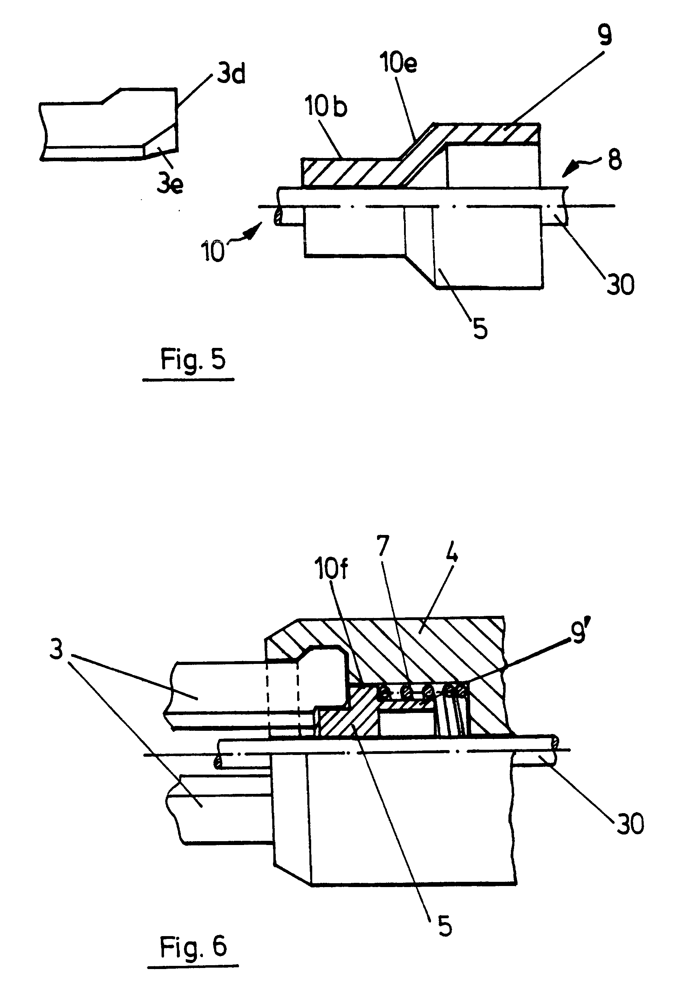

Die in Fig. 5 dargestellte Ausführungsform unterscheidet sich von dem in Fig. 3 dargestellten Ausführungsbeispiel dadurch, daß das Fixierelement 5 an seiner Stirnseite 10 eine angeschrägte Anschlag- und Aufnahmefläche 10b, 10e für eine entsprechend gestaltete Innenkante 3d, 3e der Spannzangen 3 aufweist. Auch hier unterstützt die Anschrägung ein geschmeidigeres Einsetzen der Spannzangen 3 in den Spannkolben 4. Die weiteren Merkmale dieses Fixierelementes 5 sind identisch mit denen der Fig. 3 und 4.

Fig. 6 zeigt eine Spannzangenvorrichtung mit einem hutförmigen Fixierelement 5, das ebenfalls einen Durchbruch für den Führungszapfen 30 und auf seiner Rückseite 8 eine umlaufende, durchmesserkleinere Abstufung 9' aufweist. Bei dieser Ausführungsform ist es möglich ein federelastisches Element 7 zwischen dem Spannkolben 4 und dem Fixierelement 5 anzuordnen. Eine derartige Anordnung bewirkt zwar eine bessere Führung und Abstützung des federelastischen Elementes 7, jedoch auf Kosten der Führungsfläche zwischen dem Fixierelement 5 und dem Spannkolben 4. Letzterem kann aber durch eine Verbreiterung des Steges 10f teilweise entgegengewirkt werden. Selbstverständlich können alle vorstehend beschriebenen Ausführungen des Fixierelementes 5 wahlweise entweder mit einer Abstufung 9' oder einem Bund 9 versehen sein.

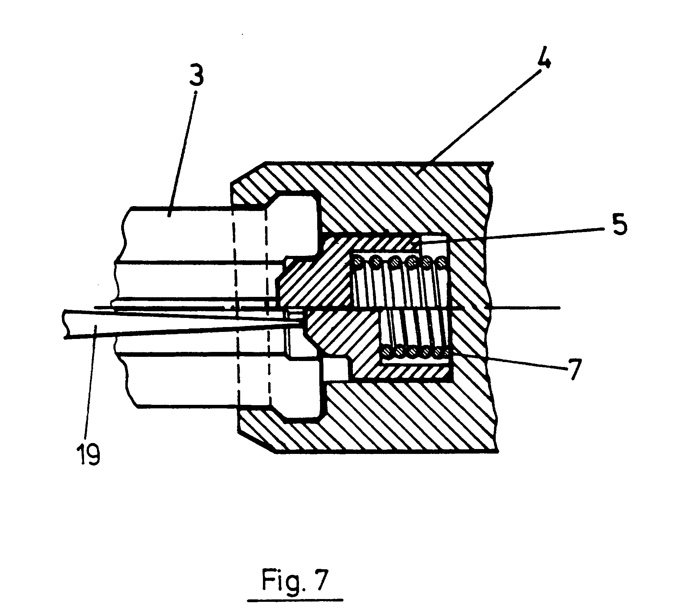

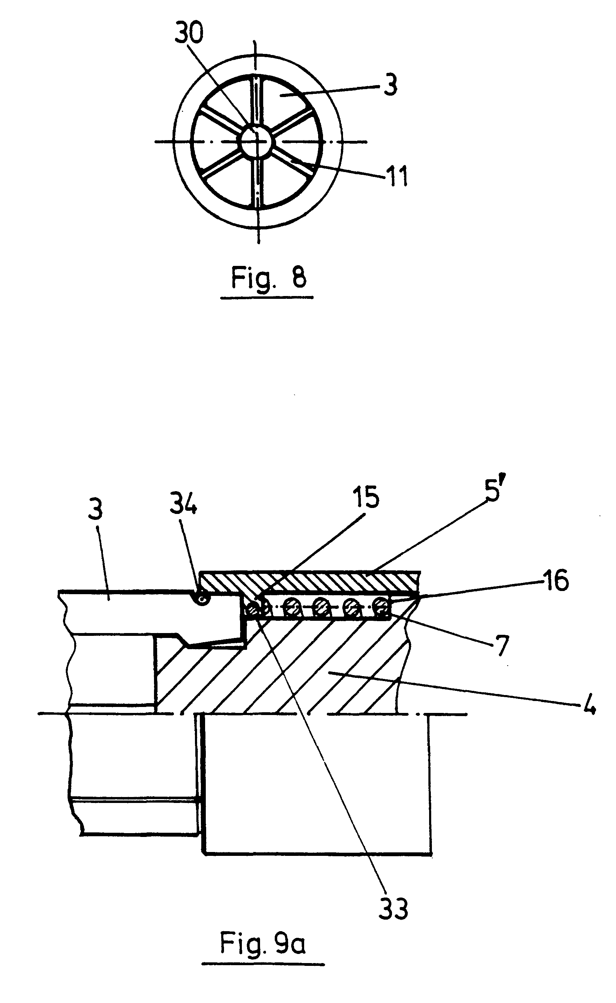

Fig. 7 zeigt ein weiteres Ausführungsbeispiel eines Fixierelementes 5, das bis auf den nicht vorhandenen Durchbruch in Axialrichtung der in Fig. 4 dargestellten Ausführungsform entspricht. Während der oberhalb der Mittellinie der Fig. 7 liegende Teil das Fixierelement 5 in Arretierstellung, d. h. in Eingriff bzw. Anlage an den Spannzangenenden zeigt, stellt der unterhalb der Mittellinie liegende Teil der Fig. 7 das mittels eines Dornes 19 in Axialrichtung, relativ zu der Spannzangenanordnung 3, 4, aus der Arretierstellung heraus verschobene Fixierelement 5 dar. Wie aus der Fig. 7 ersichtlich ist, können in dieser Stellung des Fixierelementes 5 die Spannzangen 3 mühelos aus dem Spannkolben 4 entnommen werden und nach vorne (hier nach links) aus dem Gehäuseteil 1 herausgezogen werden. Der Dorn 19 wird dabei von vorne über die Lücken 11 (vgl. Fig. 8) zwischen den Spannzangen 3 hindurch oder zentral in die Spannzangenvorrichtung 3, 4 eingeführt. Dabei können die Spannzangen 3 einzeln oder insgesamt herausgezogen werden. Das Einsetzen neuer Spannzangen 3 z. B. mit anderem Anschlußprofil erfolgt in einfacher Weise durch axiales Einschieben an der Stirnseite des Gehäuseteils 1, wobei das Fixierelement 5 gegen die Kraft der Feder 7 ausweicht und mit dem Lager-Ende 3b jeweils am vorderen Ende 4a des Spannkolbens 4 einrastet.

Eine derartige Spannzangenvorrichtung 3, 4, die ohne Führungszapfen 30 ausgebildet ist, kann auch mit einem integral an einem Fixierelement 5 angebrachten zentralen Dorn versehen sein, um ein zusätzliches Werkzeug in dornähnlicher Form z. B. einen schlanken Schraubendreher zum Zurückdrücken des Fixierelementes 5 einzusparen. Ferner ist es als zusätzliche Variante auch möglich, ein Fixierelement 5 von dem hinteren Gehäuseteil 6 her mit einem integral ausgebildeten oder einem montierbaren, stangenähnlichen Fortsatz zu versehen, um das Fixierelement 5 durch Zugbelastung aus seiner Arretierstellung zu lösen d. h. von den Lager-Enden 3b wegzuziehen. Dieses Lösen aus der Arretierstellung durch Zug bzw. Druck kann auch mittels einer Kulissenführung durch eine Verdrehbewegung herbeigeführt werden.

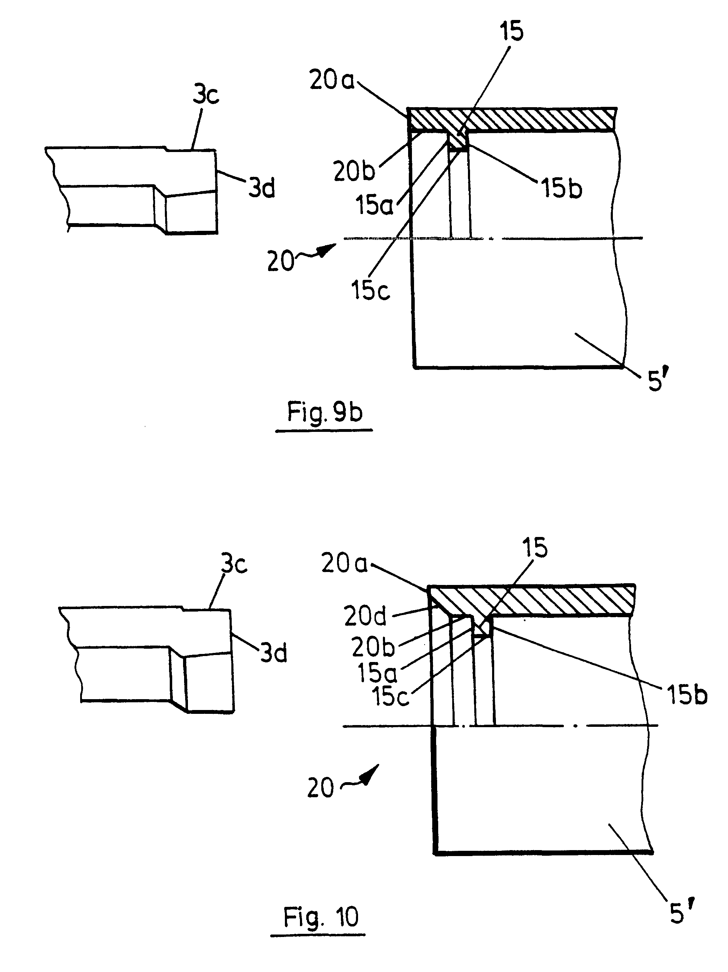

Die Fig. 9a und 9b zeigen eine Spannzangenvorrichtung 3, 4 mit einem hülsenförmigen Fixierelement 5', das um die Spannzangenanordnung 3, 4 herum angeordnet ist und an seiner Stirnseite 20 eine rechtwinklige Form 20a, 20b aufweist.

Zusätzlich umfaßt das Fixierelement 5' noch eine nach innen gerichtete, umlaufende Anschlagstufe 15, sowie eine rechtwinklige Anschlag- und Aufnahmefläche 15a, 20b, die eine Außenkante 3c, 3d der Spannzangen 3 formschlüssig aufnimmt. Gemäß Fig. 9a ist zwischen der Rückseite 15b der Anschlagstufe 15 des Fixierelementes 5' und einer Anschlagstufe 16 des Spannkolbens 4 ein federelastisches Element 7 angeordnet, das vorzugsweise eine Druckfeder ist und das Fixierelement 7 in seine in Fig. 9a gezeigte Arretierstellung mit den Spannzangen 3 zwingt.

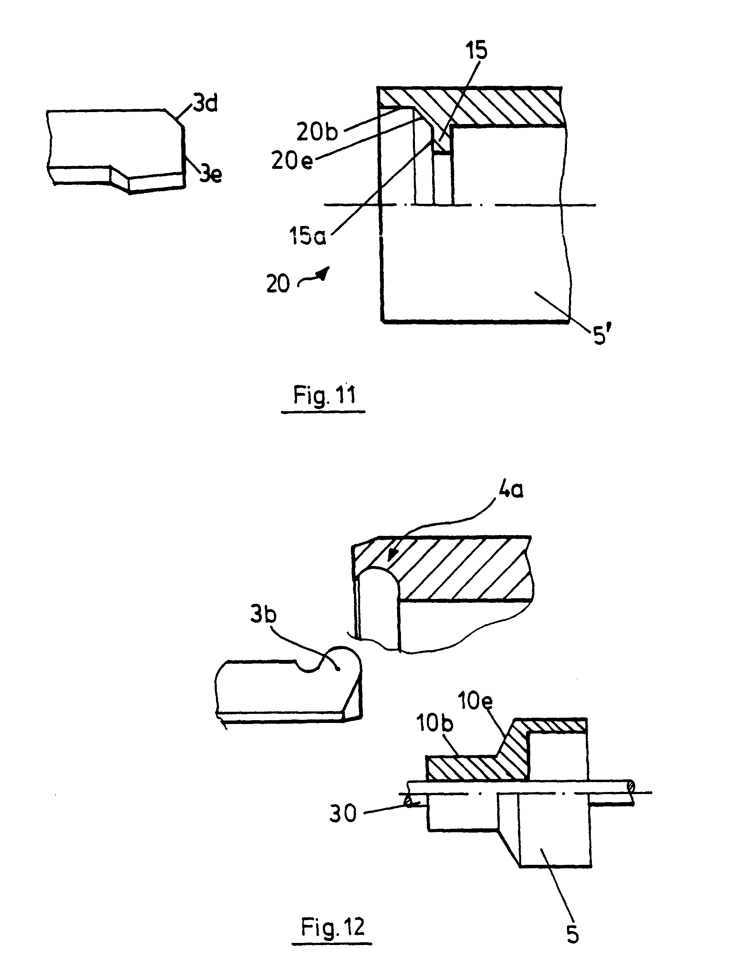

Die Fig. 10 und 11 zeigen zwei weitere Ausführungsformen des hülsenförmigen Fixierelementes 5'. In Fig. 10 weist das Fixierelement 5' an seiner Stirnseite 20 eine angeschrägte Form 20d auf, wobei aber die Anschlag- und Aufnahmefläche 15a, 20b weiterhin rechtwinklig ausgebildet ist. In Fig. 11 bildet das Fixierelement 5' dagegen an seiner Stirnseite 20 eine angeschrägte Anschlag- und Aufnahmefläche 15a, 20e für eine Außenkante 3d, 3e der Spannzangen 3 aus. Beide Ausführungsbeispiele ermöglichen ein geschmeidigeres Einsetzen der Spannzangen 3 in den Spannkolben 4, da die angeschrägte Form das Einsetzen der Spannzangen 3 in die Aufnahme des Spannkolbens 4 gleitend und zentriert unterstützt.

Bei allen Ausführungsformen des Fixierelementes 5' kann zwischen der Anschlagstufe 15 und dem Spannkolben 4 ein Dichtelement 33 vorgesehen sein, das hier exemplarisch in Fig. 9a dargestellt ist. Zudem kann zwischen der Aufnahmefläche 20b des Fixierelementes 5' und den Spannzangen 3 eine Ringfeder 34 um die Spannzangen 3 herum angeordnet sein, um diese für den Anschluß an ein Gegenstück z. B. Kupplungsnippel oder Spannbolzen eines Steilkegel-Fräskopfes radial aufzuspreizen (siehe Fig. 9a). Dies ist vor allem dann nötig, wenn das vordere Teil 3a der Spannzangen 3 mit einem Innengewinde versehen ist und das Anschlußstück ein Außengewinde aufweist, das nur bei aufgespreizten Spannzangen 3 in Eingriffposition mit der Spannzangenvorrichtung gebracht werden kann.

Ferner sei hier noch angeführt, daß sich auch das hülsenförmige Fixierelement 5' mittels eines Dornes in Axialrichtung, relativ zu der Spannzangenanordnung 3, 4, aus dem Eingriff mit den Spannzangen 3 schieben läßt. Dabei wird der Dorn, wie bereits zuvor beschrieben, durch die von den Spannzangen 3 gebildeten Lücken 11 hindurchgeführt (vgl. Fig. 8). Auch hier ist wieder ein Aufbau möglich, bei dem das Fixierelement 5' von der Seite des rechten Gehäuseteiles 6 her, aus der Arretierstellung mit den Spannzangen 3 weggezogen werden kann.

Fig. 12 zeigt eine modifizierte Ausführungsform einer Lagerung eines hinteren Teils 3b der Spannzangen 3 in einem vorderen Teil 4a des Spannkolbens 4. Dabei weist das vordere Ende 4a des Spannkolbens 4 eine umlaufende Halterungsnut auf, in die ein komplementäres Profil des hinteren Teils 3b der Spannzangen 3 formschlüssig eingreift (vgl. Fig. 1, 2, 7, 9a). In Fig. 12 weist das vordere Ende 4a des Spannkolbens 4 eine kugelgelenkförmig ausgerundete Nut auf, deren Öffnungswinkel kleiner als 180° ist, um ein komplementäres, hinteres Teil 3b der Spannzangen 3 aufzunehmen. In seiner Arretierstellung bildet dabei das Fixierelement 5 mit der Ausrundung des vorderen Teiles 4a des Spannkolbens 4 einen Öffnungswinkel von größer als 180° aus und hält somit die Spannzangen 3 formschlüssig im Spannkolben 4. Bei einer derartigen Ausführung ist kein Spiel zwischen den Spannzangen 3 und dem Spannkolben 4 erforderlich, da eine radiale Verschwenkung der Spannzangen 3 durch die kugelgelenkförmige Lagerung gewährleistet ist. Diese kugelgelenkförmige Lagerung der Spannzangen 3 in dem Spannkolben 4 ist selbstverständlich auch in spiegelbildlicher Weise bei den Ausführungsformen mit einem hülsenförmigen Fixierelement 5' verwendbar.

Die oben beschriebenen Ausführungsformen des Fixierelementes 5, 5' dienen zugleich auch dem Spielausgleich. Bei herkömmlichen Einhakverbindungen ist ein enges Spiel zwischen Spannzangen und Spannkolben erforderlich, um ein Aushaken der Spannzangen aus dem Spannkolben zu verhindern, während durch den Einsatz von erfindungsgemäßen Fixierelementen 5, 5' auch ein größeres Spiel zwischen Spannzangen 3 und Spannkolben 4 möglich ist. Deshalb ermöglichen herkömmliche Einhakverbindungen auch nur eine geringe radiale Beweglichkeit der Spannzangen, während durch den Einsatz von erfindungsgemäßen Fixierelementen 5, 5' eine größere radiale Verschwenkung der Spannzangen 3 möglich ist, was den Anschluß an ein Anschlußgegenstück zusätzlich erleichtert. Hauptsächlich ermöglicht das Einsetzen von Fixierelementen 5, 5' gemäß den oben dargestellten und beschriebenen Ausführungsformen in eine Spannzangenvorrichtung 3, 4 einen einfachen, schnellen Austausch der Spannzangen 3, ohne das Gehäuse zerlegen zu müssen, womit die Verwendung derartiger Spannzangenvorrichtungen in der Praxis erleichtert wird.

## Patentansprüche

1. Spannzangenvorrichtung, insbesondere bei Schnellanschlußkupplungen für gasförmige und/oder flüssige Medien, die einen Spannkolben (4) und mehrere Spannzangen (3) mit je einem Anschlußende (3a) und einem Lagerende (3b) umfaßt, wobei die Spannzangen (3) mit ihren Lagerenden (3b) lösbar an dem Spannkolben (4) eingehängt sind und zusammen mit dem Spannkolben (4) mittels eines Betätigungselements axial verschiebbar sind,
**dadurch gekennzeichnet, daß**
die Spannzangenanordnung (3, 4) mit einem relativ zu der Spannzangenanordnung (3, 4) bewegbaren Fixierelement (5; 5') zur formschlüssigen Arretierung der Lagerenden (3b) gekoppelt ist.

2. Spannzangenvorrichtung nach Anspruch 1,
**dadurch gekennzeichnet, daß**
das Fixierelement (5; 5') axial verschiebbar ist und bevorzugt mittels eines federelastischen Elementes (7) in Richtung seiner Arretierstellung beaufschlagt ist.

3. Spannzangenvorrichtung nach Anspruch 2,
**dadurch gekennzeichnet, daß**
das Fixierelement (5) im Innenraum der Spannzangenanordnung (3, 4) hutförmig ausgebildet ist und auf seiner Rückseite (8) einen Bund (9) aufweist, der in seinem Inneren das federelastische Element (7) aufnimmt.

4. Spannzangenvorrichtung nach Anspruch 2 oder 3,
**dadurch gekennzeichnet, daß**
das Fixierelement (5) auf seiner Rückseite (8) eine umlaufende Abstufung (9') aufweist, um das federelastische Element (7) zwischen dem Fixierelement (5) und dem Spannkolben (4) anzuordnen.

5. Spannzangenvorrichtung nach einem der Ansprüche 1 bis 4,
**dadurch gekennzeichnet, daß**
das Fixierelement (5) an seiner Stirnseite (10) eine rechtwinklige oder angeschrägte Anschlag- und Aufnahmefläche (10b, 10c, 10e) für eine Innenkante (3c, 3d, 3e) der Spannzangen (3) aufweist.

6. Spannzangenvorrichtung nach einem der Ansprüche 1 bis 5,
**dadurch gekennzeichnet, daß**
das Fixierelement (5) hülsenförmig mit einem in Axialrichtung verlaufenden Durchbruch ausgebildet ist.

7. Spannzangenvorrichtung nach Anspruch 1 oder 2,
**dadurch gekennzeichnet, daß**
das Fixierelement (5') hülsenförmig um die Spannzangenanordnung (3, 4) herum ausgebildet ist und bevorzugt eine nach innen gerichtete, umlaufende Anschlagstufe (15) aufweist.

8. Spannzangenvorrichtung nach Anspruch 7,
**dadurch gekennzeichnet, daß**
das Fixierelement (5') an seiner Stirnseite (20) eine rechtwinklige Form (20a, 20b) oder eine angeschrägte Form (20d) aufweist.

9. Spannzangenvorrichtung nach Anspruch 7 oder 8,
**dadurch gekennzeichnet, daß**
das federelastische Element (7) auf der Innenseite des Fixierelements (5') an einer Rückseite (15b) der Anschlagstufe (15) anliegt.

10. Spannzangenvorrichtung nach einem der Ansprüche 7 bis 9,
**dadurch gekennzeichnet, daß**
das Fixierelement (5') an seiner Stirnseite (20) eine rechtwinklige Anschlag- und Aufnahmefläche (15a, 20b) oder eine angeschrägte Anschlag- und Aufnahmefläche (15a, 20e) für eine Außenkante (3c, 3d, 3e) der Spannzangen (3) ausbildet.

11. Spannzangenvorrichtung nach einem der Ansprüche 1 bis 10,
**dadurch gekennzeichnet, daß**
das Fixierelement (5, 5') durch die Spannzangenanordnung (3, 4) hindurch mit einem Dorn (19) axial verschiebbar ist.

## Claims

1. Collet device, especially in fast connection couplings for gaseous and/or liquid media, which comprises a clamping plunger (4) and several collets (3) with a connection end (3a) and a bearing end (3b) respectively, the collets (3) being secured detachably with their bearing ends (3b) to the clamping plunger (4) and being axially adjustable together with the clamping plunger (4) by means of an actuation element,
**characterised in that**
the collet arrangement (3, 4) is coupled to a moveable fixing member (5; 5') relative to the collet arrangement (3, 4) for catching the bearing ends (3b) in an interlocking manner.

2. Collet device according to claim 1, **characterised in that** the fixing member (5; 5') is axially adjustable and is preferably actuated by means of a spring elastic element (7) in the direction of its stopping position.

3. Collet device according to claim 2, **characterised in that** the fixing member (5) is designed hat-shaped in the interior space of the collet arrangement (3, 4) and has a collar (9) on its rear side (8), said collar containing the spring elastic element (7) in its interior.

4. Collet device according to claim 2 or 3, **characterised in that** the fixing member (5) has an encompassing graduation (9') on its rear side (8), in order to arrange the spring elastic element (7) between the fixing member (5) and the clamping plunger (4).

5. Collet device according to one of claims 1 to 4,
**characterised in that** the fixing member (5) has a square or diagonal stopping and receiving surface (10b, 10c, 10e) on its front side (10) for an inner edge (3c, 3d, 3e) of the collets (3).

6. Collet device according to one of claims 1 to 5,
**characterised in that** the fixing member (5) is designed shell-shaped with a hole extending in a radial direction.

7. Collet device according to claim 1 or 2, **characterised in that** the fixing member (5') is designed shell-shaped around the collet device (3, 4) and has preferably an encompassing stopping step (15) directed inwards.

8. Collet device according to claim 7, **characterised in that** the fixing member (5') has a square shape (20a, 20b) or a diagonal shape (20d) on its front side (20).

9. Collet device according to claim 7 or 8, **characterised in that** the spring elastic element (7) on the inner side of the fixing member (5') is adjacent to a rear side (15b) of the stopping step (15).

10. Collet device according to one of claims 7 to 9,
**characterised in that** the fixing member (5') forms on the front side (20) a square stopping and receiving surface (15a, 20b) or a diagonal stopping and receiving surface (15a, 20e) for an outer edge (3c, 3d, 3e) of the collets (3).

11. Collet device according to one of claims 1 to 10,
**characterised in that** the fixing member (5, 5') is axially adjustable with a mandrel (19) through the collet arrangement (3, 4).

## Revendications

1. Dispositif à pinces de serrage, en particulier dans le cas d'accouplements par raccord rapide pour milieux gazeux et/ou liquides, qui comprend un piston de serrage (4) et plusieurs pinces de serrage (3) avec chacune une extrémité de raccordement (3a) et une extrémité de palier (3b), les pinces de serrage (3) étant suspendues de façon amovible au piston de serrage (4) par leurs extrémités de palier (3b) et pouvant être déplacées axialement conjointement avec le piston de serrage (4) au moyen d'un élément de commande, **caractérisé en ce que** l'arrangement de pinces de serrage (3, 4) est couplé à un élément de fixation (5 ; 5') déplaçable par rapport à l'arrangement des pinces de serrage (3, 4) pour le blocage par engagement positif des extrémités de palier (3b).

2. Dispositif à pinces de serrage selon la revendication 1, **caractérisé en ce que** l'élément de fixation (5; 5') est déplaçable axialement et **en ce qu'**il est chargé de préférence au moyen d'un élément à déformation élastique (7) en direction de sa position de blocage.

3. Dispositif à pinces de serrage selon la revendication 2, **caractérisé en ce que** l'élément de fixation (5) est conçu de façon à former un chapeau dans l'espace intérieur de l'arrangement des pinces de serrage (3, 4) et **en ce qu'**il comporte sur sa face arrière (8) un collet (9) qui accueille en son intérieur l'élément à déformation élastique (7).

4. Dispositif à pinces de serrage selon la revendication 2 ou 3, **caractérisé en ce que** l'élément de fixation (5) comporte en sa face arrière (8) une forme étagée périphérique (9'), pour disposer l'élément à déformation élastique (7) entre l'élément de fixation (5) et le piston de serrage (4).

5. Dispositif à pinces de serrage selon l'une des revendications 1 à 4, **caractérisé en ce que** l'élément de fixation (5) comporte en sa face avant (10) une surface de réception et de butée à angle droit ou biseautée (10b, 10c, 10e) pour un bord intérieur (3c, 3d, 3e) des pinces de serrage (3).

6. Dispositif à pinces de serrage selon l'une des revendications 1 à 5, **caractérisé en ce que** l'élément de fixation (5) est conçu en forme de manchon avec un ajour s'étendant dans la direction axiale.

7. Dispositif à pinces de serrage selon la revendications 1 ou 2, **caractérisé en ce que** l'élément de fixation (5') est conçu de façon à former un manchon tout autour de l'arrangement des pinces de serrage (3, 4) et **en ce qu'**il comporte de préférence un gradin de butée périphérique (15), orienté vers l'intérieur.

8. Dispositif à pinces de serrage selon la revendication 7, **caractérisé en ce que** l'élément de fixation (5') présente en sa face avant (20) une forme à angle droit (20a, 20b) ou une forme biseautée (20d).

9. Dispositif à pinces de serrage selon la revendication 7 ou 8, **caractérisé en ce que** l'élément à déformation élastique (7) repose sur la face intérieure de l'élément de fixation (5') sur une face arrière (15b) du gradin de butée (15).

10. Dispositif à pinces de serrage selon l'une des revendications 7 à 9, **caractérisé en ce que** l'élément de fixation (5') forme en sa face avant (20) une surface de réception et de butée à angle droit (15a, 20b) ou une surface de réception et de butée biseautée (15a, 20e) pour un bord extérieur (3c, 3d, 3e) des pinces de serrage (3).

11. Dispositif à pinces de serrage selon l'une des revendications 1 à 10, **caractérisé en ce que** l'élément de fixation (5, 5') peut être déplacé axialement à travers l'arrangement des pinces de serrage (3, 4) à l'aide d'un mandrin (19).
